## Europäisches Patentamt

## European Patent Office

## Office européen des brevets

(11) Veröffentlichungsnummer: **0 438 070 A2**

# (12) EUROPÄISCHE PATENTANMELDUNG

(21) Anmeldenummer: **91100188.1**

(22) Anmeldetag: **08.01.91**

(51) Int. Cl.5: **B23G 5/06**

(30) Priorität: **19.01.90 DE 4001483**

(43) Veröffentlichungstag der Anmeldung:
**24.07.91 Patentblatt 91/30**

(84) Benannte Vertragsstaaten:
**AT BE CH DE DK ES FR GB GR IT LI LU NL SE**

(71) Anmelder: **Emuge-Werk Richard Glimpel,
Fabrik für Präzisionswerkzeuge, vormals
Moschkau & Glimpel
Nürnberger Strasse 100
W-8560 Lauf/Pegnitz(DE)**

(72) Erfinder: **Glimpel, Helmut, Dipl.-Ing.
Gartenstrasse 6
W-8560 Lauf a. d. Pegnitz(DE)**

(74) Vertreter: **Böhme, Volker, Dipl.-Ing. et al
Patentanwälte Dipl.-Ing. E. Kessel Dipl.Ing. V.
Böhme Karolinenstrasse 27
W-8500 Nürnberg 1(DE)**

(54) **Gewindebohrer mit kegeligem Gewinde.**

(57) Es gibt einen Gewindebohrer, der eine kegelige Gewindepartie 2 aufweist, deren im Kegelbereich liegenden Gewindezähne 4 mit einem, unter einem Freiwinkel angeordneten Hinterschliff versehen sind. Dabei ist es erwünscht, wenn Schnittmoment und Reibung nach hinten, zu größerem Durchmesser hin verringert ist. Dies ist erreicht, indem der Freiwinkel der im Kegelbereich 2 liegenden Gewindezähne 4 nach hinten hin gleich bleibt oder zunimmt. Durch eine einfache Bearbeitungsmaßnahme lassen sich das Schnittmoment und die Reibung in einem weiten Umfang variabel beeinflussen.

Fig.1

## GEWINDEBOHRER MIT KEGELIGEM GEWINDE

Die Erfindung betrifft einen Gewindebohrer, der eine kegelige Gewindepartie aufweist, deren im Kegelbereich liegenden Gewindezähne mit einem, unter einem Freiwinkel angeordneten Hinterschliff versehen sind.

Bei einer kegeligen Gewindepartie eines Gewindebohrers nimmt die in Wendelrichtung des Gewindes gesehene Breite der Zähne bekanntlich zu, so daß beim Erzeugen von Gevinde die hinteren, breiteren Zähne eine viel größere Reibung verursachen als die vorderen, weniger breiten Zähne. Das Schnittmoment nimmt nach hinten, d. h. zum größeren Durchmesser hin zu. Um dieser negativen Erscheinung zu begegnen, werden die Gewindegänge im Kegelbereich mit einem Hinterschliff versehen, dem ein Freiwinkel zuzuordnen ist. Die den Hinterschliff erzeugende Schleifscheibe macht bisher pro Zahn den gleichen Hub und erzeugt somit Hinterschliffe, deren Freiwinkel zu größeren Durchmessern hin sich verringert bzw. abnimmt. Somit wird mit wachsendem Durchmesser und damit wachsendem Schnittmoment die Wirkung des Abhilfsmittels "Freiwinkel" geringer. Um Schnittmoment und Reibung nach hinten, zu größeren Durchmessern hin zu verringern, setzt man nach hinten hin Zähne aus. Dies hat zur Folge, daß jeder verbleibende Zahn mehr Werkstoff abheben muß und sich im geschnittenen Gewinde größere Markierungen ergeben. Man könnte auch die Zahnbreite nach hinten hin konstant halten, was mit einem ungewöhnlich großen Fertigungsaufwand verbunden ist.

Eine Aufgabe der Erfindung ist es nun, einen Gewindebohrer der eingangs genannten Art zu schaffen, dessen Schnittmoment und Reibung nach hinten, zum größeren Durchmesser hin verringert ist. Der erfindungsgemäße Gewindebohrer ist, diese Aufgabe lösend, dadurch gekennzeichnet, daß der Freiwinkel der im Kegelbereich liegenden Gewindezähne nach hinten hin gleich bleibt oder zunimmt.

Durch eine einfache Bearbeitungsmaßnahme lassen sich das Schnittmoment und die Reibung in einem weiten Umfang variabel beeinflussen. Durch die erfindungsgemäße Gestaltung des, Hinterschliff-Freiwinkels lassen sich die Forderungen bezüglich vermeidung eines Verschneidens und Vermeidung eines reibungsbedingten Kaltschweißens in verbesserter Weise erfüllen und aufeinander abstimmen. Die angegebene Gestaltung des Freiwinkels ermöglicht verbesserte Kompromisse zwischen einer Verbesserung der Schneideigenschaften, noch brauchbaren Führungseigenschaften und nach hinten zunehmendem Schnittmoment.

Unter einem Gewindebohrer mit kegeliger Gewindepartie wird hier Primär ein Gewindebohrer mit Kegelgewinde gemeint und Wird auch ein im wesentlichen zylindrischer Gewindebohrer mit Anstrehlung im Schneidteil verstanden; auch im Bereich der Anstrehlung liegt ein kegeliger Verlauf des Gewindes vor. Mit "Hinterschliff" ist nicht nur der Flankenhinterschliff, sondern auch der Profilhinterschliff gemeint, bei dem die Gewindezähne an den Flanken und außen hinterschliffen sind. Der Gewindebohrer ist z.B. in geeigneter Weise genutet oder ist ein Gewindebohrer ohne Nuten, d.h. ein Gewindefurcher, bei dem der Zahn durch die Profilierung bestimmt ist. Die Größe des Hinterschliffs läßt sich statt durch den Freiwinkel auch durch den "Hub" ausdrücken. Unter "Hub" oder "Hinterschliffgröße" wird hier das Maß der durch das Hinterschleifen erzeugten Materialabtragung verstanden, das in einem vorbestimmten, für alle Gewindezähne gleichen Abstand vom Beginn des hinterschliffenen Bereiches bzw. der Materialabtragung feststellbar ist.

Es gibt Fälle, bei denen die Zahnbreite in Richtung zu grösserem Durchmesser gleichbleibend ist. Von besonderem Vorteil ist die Erfindung in Verbindung damit, daß sich die Zahnbreite in Richtung zu größerem Durchmesser vergrößert, weil sich die damit verbundene Vergrößerung des Schnittmomentes in einem gewissen Umfang kompensieren läßt. Es gibt Fälle, bei denen Zähne in Richtung zu größerem Durchmesser ausgesetzt sind. Von besonderem Vorteil ist die Erfindung damit, daß der Gewindebohrer mit Zähnen voll bestückt ist, weil sich das dadurch gegebene, sich in Richtung zu größerem Durchmesser vergrößernde schnittmomment in einem gewissen Umfang kompensieren läßt.

Es ist denkbar, die erfindungsgemäße Gestaltung des Freiwinkels nur über einen Teil der Länge des kegeligen Bereich vorzusehen, der über die gesamte Länge mit Hinterschliff versehen ist. Besonders zweckmäßig und vorteilhaft ist es jedoch, wenn das Gleichbleiben oder die Zunahme des Hinterschliff-Freiwinkels sich über die gesamte Länge des kegeligen Bereiches erstreckt. Hierdurch sind die Vorteile der erfindungsgemäßen Freiwinkel-Gestaltung voll ausgenutzt und ist die Erzeugung des Gewindes des Gewindebohrers vereinfacht.

Die Freiwinkel-Zunahme ist entweder stetig oder stufenweise, wobei pro Stufe zwei oder mehr Gewindegänge den gleichen "Hub" aufweisen. Unter stufenweiser Änderung wird hier verstanden, daß zwei oder mehr Stufen vorgesehen sind. Die Zunahme des Freiwinkels ist im Ausmaß an den zu bearbeitenden Werkstoff und an den Maschinentyp, an dem der Gewindebohrer eingesetzt wird, angepaßt. Neuzeitliche, NC-gesteuerte Werkzeugmaschinen zur Herstellung des Gewindebohrers lassen eine feinfühlige Konstanz oder Zunahme des Freiwinkels zu, indem z.B. die Position der den Hinterschliff erzeugenden Schleifscheibe während der Bearbeitung des Gewindebohrers verändert wird.

In der Zeichnung sind bevorzugte Ausführungsformen der Erfindung dargestellt und zeigt

Fig. 1     eine Seitenansicht eines ersten Gewindebohrers mit kegeligem Gewinde,

Fig. 2 und 3     jeweils schematisch eine Seitenansicht eines Gewindezahnes mit Hinterschliff,

Fig. 4     eine schematische Darstellung mehrerer Gewindezähne des Gewindebohrers gemäß Fig. 1, und

Fig. 5     im Schnitt einen Teil eines zweiten Gewindebohrers mit kegeligem Gewinde.

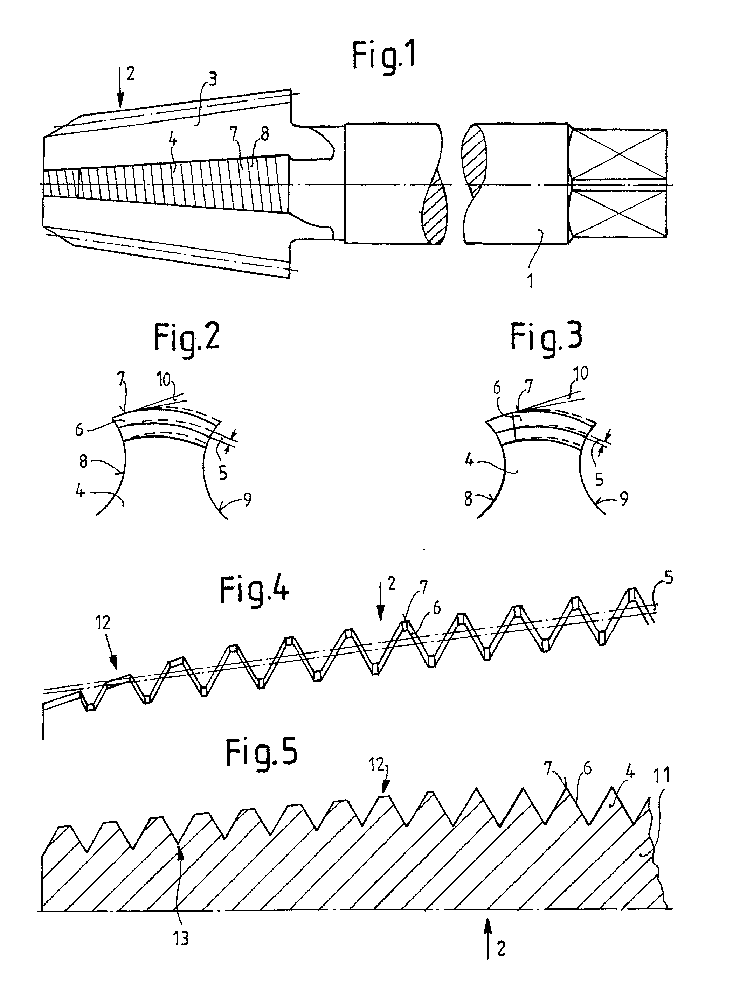

Der Gewindebohrer gemäß Fig. 1 trägt an einem Schaft 1 eine im wesentlichen kegelstumpfförmige Gewindepartie 2, die über die Länge, abgesehen vom vorderen, den kleineren Durchmesser aufweisenden Ende, absatzlos ist und einen stetig ansteigenden Flankendurchmesser aufweist. Die Gewindepartie 2 ist mit Nuten 3 versehen, welche die Gewindegänge in Gewindezähne 4 untergliedern. Die Gewindezähne werden von vorne nach hinten breiter. Die Gewindepartie 2 ist über die gesamte Länge mit einem Hinterschliff 5 versehen, der als Profilhinterschliff sowohl an den Flanken 6 als auch außen 7 an den Gewindezähnen 4 vorgesehen ist.

In Fig. 2 und 3 sind zwei verschiedene Ausbildungen des Hinterschliffs 5 gezeigt, der eine in Richtung von der Zahn-Vorderseite 8 zur Zahn-Hinterseite 9 größer werdende, den Querschnitt des Zahnes verringernde Materialabtragung ist. Während der Hinterschliff 5 gemäß Fig. 2 an der Zahnvorderseite 8 beginnt, beginnt er gemäß Fig. 3 mit Abstand von der Zahn-Vorderseite 8. Der Hinterschliff ergibt einen Freiwinkel 10 zwischen der hinterschliffenen Fläche und der gedachten, vor dem Hinterschleifen vorliegenden Fläche und hat an der Zahnhinterseite einen "Hub" entsprechend der Materialabtragung. Die vor dem Hinterschleifen vorliegende Fläche hat 0° Freiwinkel.

Fig. 4 verdeutlicht den nach hinten im Freiwinkel zunehmenden Hinterschliff. In Fig. 1 ist bei einem typischen Gewindebohrer mit Kegelgewinde das gesamte Gewinde kegelig. Gemäß Fig. 5 ist ein an sich zylindrischer Gewindebohrer mit einer Gewindepartie 2 versehen, die ein zylindrisches Führungsteil 11 und ein Schneidteil 12 umfaßt. Das Schneidteil 12 ist mit einer Anstrehlung 13 versehen, die mit Abstand vom Ende des Schneidteiles endet und ein kegeliges Gewinde darstellt. Die Anstrehlung kann sich auch bis in das Führungsteil 11 erstrecken. Über die Anstrehlung hin ist in nicht näher gezeigter Weise ein Hinterschliff vorgesehen, dessen Freiwinkel von vorne nach hinten zunimmt.

**Patentansprüche**

1. Gewindebohrer, der eine kegelige Gewindepartie aufweist, deren im Kegelbereich liegenden Gewindezähne mit einem, unter einem Freiwinkel angeordneten Hinterschliff versehen sind, **dadurch gekennzeichnet,** daß der Freiwinkel der im Kegelbereich (2, 13) liegenden Gewindezähne nach hinten hin gleich bleibt oder zunimmt.

2. Gewindebohrer nach Anspruch 1, **dadurch gekennzeichnet,** daß das Gleichbleiben oder die Zunahme des Hinterschliff-Freiwinkels sich über die gesamte Länge des kegeligen Bereiches (2, 13) erstreckt.

# Fig.1

# Fig.2

# Fig.3

# Fig.4

# Fig.5